# EUROPEAN PATENT APPLICATION

(11) **EP 4 098 901 A1**
(43) Date of publication of application: **07.12.2022**
(21) Application number: 21747426.1
(22) Date of filing: 21.01.2021
(51) Int. Cl.: F16D 25/08

(54) **CONCENTRIC CLUTCH ACTUATOR**

(30) Priority: 31.01.2020 KR 20200011713
(71) Applicant: Pyong Hwa Valeo Co., Ltd., Daegu 42701 (KR)
(72) Inventor: LEE, Sung Un, Daegu 41525 (KR); HAN, In Hwan, Dalseong-gun Daegu 42919 (KR)
(74) Representative: Pfenning, Meinig & Partner mbB
(86) International application number: PCT/KR2021/000842
(87) International publication number: WO 2021/153944

(57) **Abstract**

The present disclosure relates to a concentric clutch actuator which accurately measures the displacement of a piston relative to a tube guide when the clutch is operated and allows only the axial direction movement of the piston relative to the tube guide, so that an anti-rotation function can be implemented. The concentric clutch actuator includes: a tube guide configured to be installed in a casing of a transmission and form a pressure chamber therein; a piston configured to be installed movably within the pressure chamber of the tube guide and include a release bearing that is installed on the piston and presses a diaphragm spring of the clutch; a holder configured to be fixed to the piston and have a magnet installed therein; and a plug configured to be installed on the tube guide and have a displacement sensor that measures a stroke of the piston by detecting a position of the magnet. The holder includes a receiving portion for assembly with the plug, and the plug includes a stem portion that extends in an axial direction in order to guide an axial direction movement relative to the receiving portion of the holder and is assembled to an inside of the receiving portion of the holder.

## Description

### CROSS-REFERENCE TO RELATED APPLICATIONS

The present application claims priority to Korean Patent Application No. 10-2020-0011713, filed on January 31, 2020, the entire contents of which is incorporated herein for all purposes by this reference.

### BACKGROUND

### Field

The present disclosure relates to a concentric clutch actuator and more particularly to a concentric clutch actuator capable of accurately measuring the displacement of a piston relative to a tube guide when the clutch is operated and of allowing only the axial direction movement of the piston relative to the tube guide.

### Description of the Related Art

In general, an automated manual transmission (AMT) is configured to automatically control power provided from an output side of an engine to an input side of a transmission through a separate actuator instead of manipulation by a driver during shifting.

Not only such an automated manual transmission is equipped with a multi-stage gear train for shifting the same as that of an existing manual transmission but also operations of a control mechanism for shifting are automatically performed through the operation control of a clutch, so that the AMT can increase the convenience for the driver.

For example, the clutch actuator applied to a conventional automated manual transmission includes a piston which moves from a tube guide in an axial direction by being operated by a pneumatic or hydraulic pressure provided from the outside. In this case, the axial direction movement of the piston relative to the tube guide controls power applied from the engine to the transmission by pressing a diaphragm spring.

However, in the conventional clutch actuator, when the axial direction movement of the piston relative to the tube guide occurs, an anti-rotation function that can support a torque applied to the piston by the change in the engine RPM is not provided. Therefore, there is a problem that the piston rotates with respect to the tube guide.

### SUMMARY

### Technical Problem

The purpose of the present disclosure is to provide a concentric clutch actuator which accurately measures the displacement of a piston relative to a tube guide when the clutch is operated and allows only the axial direction movement of the piston relative to the tube guide, so that an anti-rotation function can be implemented.

### Technical Solution

One embodiment is a concentric clutch actuator including: a tube guide configured to be installed in a casing of a transmission and form a pressure chamber therein; a piston configured to be installed movably within the pressure chamber of the tube guide and include a release bearing that is installed on the piston and presses a diaphragm spring of the clutch; a holder configured to be fixed to the piston and have a magnet installed therein; and a plug configured to be installed on the tube guide and have a displacement sensor that measures a stroke of the piston by detecting a position of the magnet. The holder includes a receiving portion for assembly with the plug, and the plug includes a stem portion that extends in an axial direction in order to guide an axial direction movement relative to the receiving portion of the holder and is assembled to an inside of the receiving portion of the holder.

The holder includes: a first mounting portion for assembly with the piston; and a second mounting portion for installation of the magnet. The receiving portion is formed between the first mounting portions, so that the holder is installed in such a way as to be able to only move in the axial direction along the stem portion of the plug.

The first mounting portion is composed of a pair of members that branch on both sides with the receiving portion placed therebetween, and the second mounting portion is disposed at a position spaced apart from the receiving portion in a radial direction.

The concentric clutch actuator further includes a mounting bracket that is coupled to the tube guide in order to install the tube guide with respect to the casing of the transmission. The plug includes a mounting portion for assembly with the mounting bracket. The mounting portion is composed of a pair of members that branch on both sides with the stem portion interposed therebetween.

The concentric clutch actuator further includes a retainer spring installed between the piston and the release bearing in the axial direction in order to mitigate an impact caused by an axial load generated when the release bearing and the diaphragm spring come into contact. The retainer spring includes an annular wave spring body and a catching piece. The annular wave spring body has a shape that is continuously corrugated along a circumferential direction and is supported in contact with the release bearing. The catching piece branches in the axial direction and extends at a position radially spaced apart from the wave spring body and has a free end coupled to and supported by the piston.

The concentric clutch actuator further includes a hollow dust cover that is installed between the tube guide and the piston and is associated with an axial direction movement of the piston. One end of the dust cover is fixed to the piston and the other end of the dust cover is slidably assembled to an outer peripheral surface of the tube guide.

The dust cover includes a scraper ring installed at a contact portion with the outer peripheral surface of the tube guide in order to reduce friction and prevent introduction of foreign substances.

The concentric clutch actuator further includes a sealing member which is installed at a contact portion between the tube guide and the piston and maintains sealing of the pressure chamber. The sealing member is installed in seating grooves positioned respectively on inner and outer peripheral surfaces of the piston, and free ends of inner and outer sides in a radial direction come into contact with inner and outer peripheral surfaces of the tube guide in a sealed state respectively.

The concentric clutch actuator further includes a restoring spring that is installed in the pressure chamber positioned within the tube guide and moves the piston to a restoration position. The restoration spring is installed such that one end of the restoration spring is fixed to the tube guide and the other end of the restoration spring is fixed to the piston.

### Advantageous Effects

The concentric clutch actuator according to the embodiment of the present disclosure can accurately detect the displacement of the piston by measuring the position of the magnet installed in the holder through the medium of the displacement sensor installed in the plug when the clutch is operated. In particular, through the axial assembly of the stem portion of the plug to the receiving portion of the holder, it is possible to implement an anti-rotation function that can support a torque applied to the piston by the change in the engine RPM.

That is, according to the embodiment of the present disclosure, the displacement sensor is installed in the plug fixed to the tube guide, and the magnet is installed in the holder fixed to the piston. Then, the stem portion of the plug is inserted and assembled to the receiving portion of the holder. Thus, when the clutch is operated, the holder is displaced axially integrally with the piston in the state where the magnet has been installed, and the plug can allow only the axial direction movement of the holder in the state where the displacement sensor has been installed. Accordingly, it is possible to the anti-rotation function capable of measuring the displacement of the piston and of restricting the rotation of the piston.

### BRIEF DESCRIPTION OF THE DRAWINGS

FIG. 1 is a perspective view showing a concentric clutch actuator according to an embodiment of the present disclosure;
FIG. 2 is a cross sectional view of the concentric clutch actuator shown in FIG. 1 and shows before and after states of a piston operation with respect to a tube guide;
FIG. 3 is an exploded perspective view respectively showing separately a holder, a magnet, a plug, and a displacement sensor of the concentric clutch actuator shown in FIG. 1;
FIG. 4 is a perspective view showing a rear portion of a holder shown in FIG. 3;
FIG. 5 is a perspective view showing separated main components in order to describe coupling relations of components of the concentric clutch actuator shown in FIG. 3;
FIG. 6 is a perspective view showing an enlarged separate retainer spring shown in FIG. 5.

### DETAILED DESCRIPTION

Hereinafter, an exemplary embodiment of the present disclosure will be described in detail with reference to the accompanying exemplary drawings.

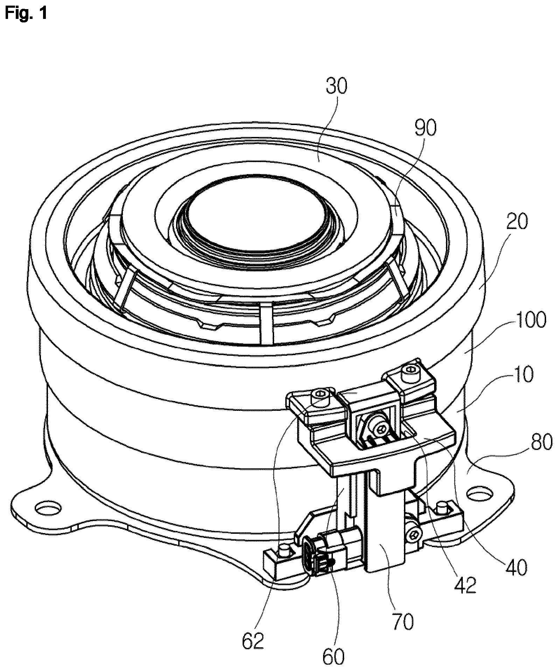

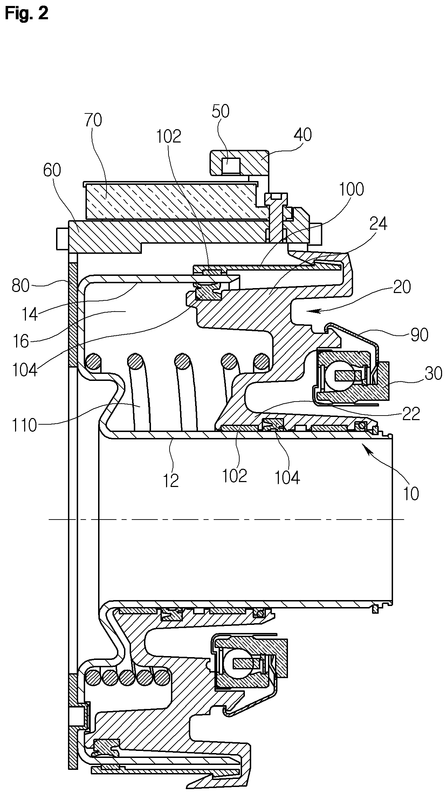

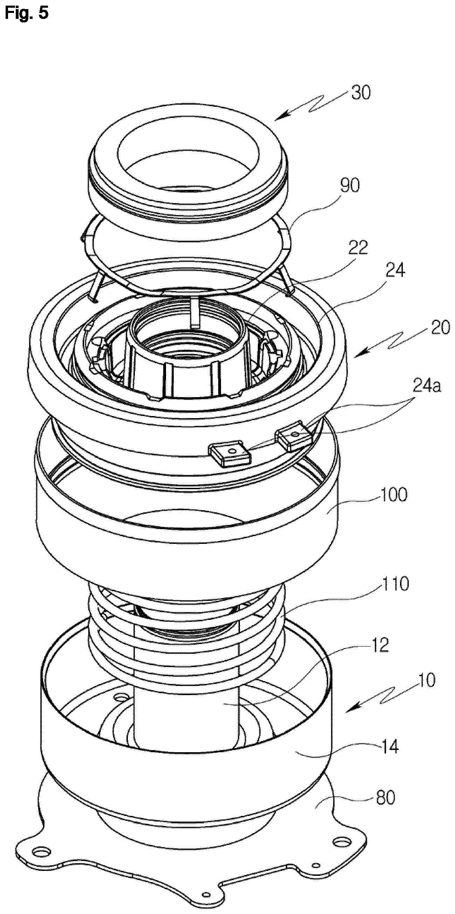

Referring to FIGS. 1 to 5, a concentric clutch actuator according to an embodiment of the present disclosure includes a tube guide 10 installed in a casing of a transmission, a piston 20 installed movably within the tube guide 10, a release bearing 30 which is installed at a free end of the piston 20 and presses a diaphragm spring of a clutch, a holder 40 fixed to the piston 20, a magnet 50 installed in the holder 40, a plug 60 installed on the tube guide 10, and a displacement sensor 70 installed on the plug 60 to measure a stroke of the piston 20 by detecting the position of the magnet 50.

The tube guide 10 is a member formed in a hollow double cylinder structure and is configured to include an inner member 12 and an outer member 14 that are respectively coaxially disposed on the inner and outer sides in the radial direction with respect to the central axis thereof.

In addition, the tube guide 10 has a pressure chamber 16 in a space between the inner member 12 and the outer member 14. The pressure chamber 16 may receive an operating pressure (pneumatic pressure or hydraulic pressure) provided from the outside.

The piston 20 is installed to be movable within the pressure chamber 16 of the tube guide 10 in the axial direction thereof and is configured to include an inner member 22 and an outer member 24 that are respectively coaxially disposed on the inner and outer sides in the radial direction with respect to the central axis thereof. That is, the inner member 22 of the piston 20 is movably installed with being sealed with respect to the outer peripheral surface of the inner member 12 of the tube guide 10. The outer member 24 of the piston 20 is movably installed with being sealed with respect to the inner peripheral surface of the outer member 14 of the tube guide 10.

Also, the piston 20 is configured to mount the release bearing 30 to the free end in order to press the diaphragm spring (not shown) of the clutch.

The holder 40 is fixed to the outer member 24 of the piston 20 and is configured to have a seating surface for installation of the magnet 50 on the inner surface. In this case, the seat surface may be formed in a concave shape on the holder 40.

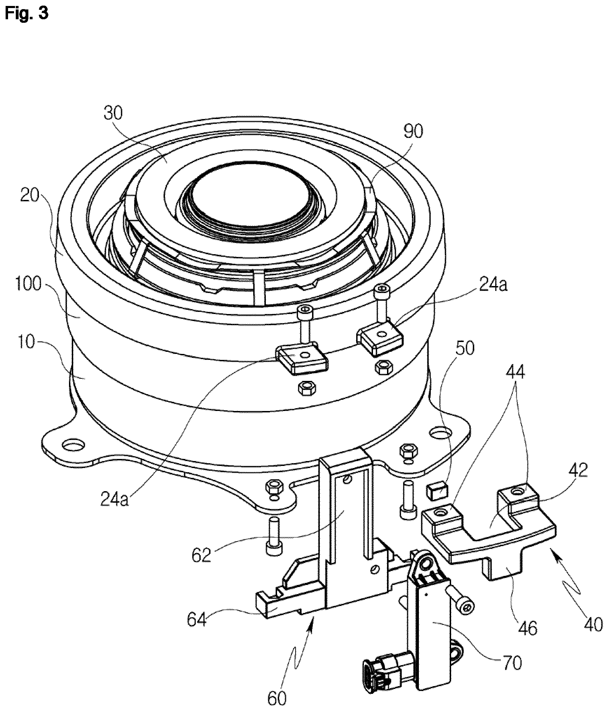

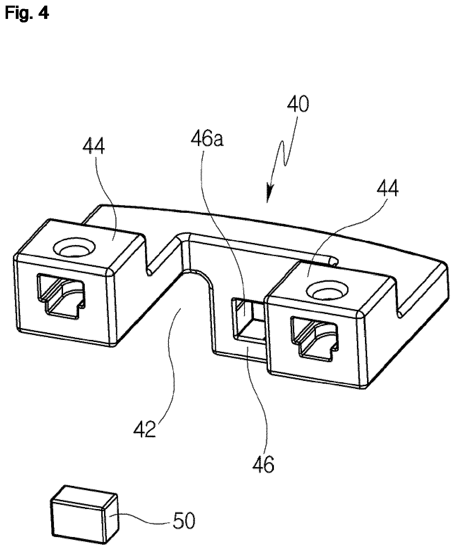

That is, as shown in FIGS. 3 and 4, the holder 40 includes a receiving portion 42 for assembly with a stem portion 62 of the plug 60, a first mounting portion 44 for assembly with the piston 20, and a second mounting portion 46 having a seating surface 46a for installation of the magnet 50.

In this case, the receiving portion 42 is formed between the first mounting portions 44, so that the holder 40 is installed in such a way as to be able to only move in the axial direction along the stem portion 62 of the plug 60. That is, through the assembly with the stem portion 62 of the plug 60, the receiving portion 42 of the holder 40 is not only restricted in a rotation direction but also is allowed to only move in the axial direction. Accordingly, when the clutch is operated, an anti-rotation function capable of restricting the rotation of the piston 20 with respect to the tube guide 10 is implemented.

Also, the first mounting portion 44 is a pair of members that branch left and right with respect to the second mounting portion 46. The receiving portion 42 is positioned between the first mounting portions 44. That is, the first mounting portion 44 is composed of a pair of members that branch on both sides with the receiving portion 42 placed therebetween, and the second mounting portion 46 is disposed at a position spaced apart from the receiving portion 42 in the radial direction.

On the other hand, the outer member 24 of the piston 20 includes a mounting protrusion 24a which protrudes outward in the radial direction for coupling to the first mounting portion 44 of the holder 40. The mounting protrusion 24a may restrict the position of the holder 40 by screw-fastening the first mounting portion 44 of the holder 40 through the use of a bolt and a nut.

The plug 60 is installed on the outer member 14 of the tube guide 10 and is configured to install the displacement sensor 70 on an outer surface facing the magnet 50 in order to measure the stroke of the piston 20. In this case, it is preferable that the plug 60 and the displacement sensor 70 should be coupled by screw-fastening through the use of a bolt and a nut.

Also, the plug 60 includes the stem portion 62 that extends in the axial direction in order to guide the axial direction movement relative to the receiving portion 42 of the holder 40 and is assembled to the inside of the receiving portion 42 of the holder 40.

Meanwhile, the concentric clutch actuator according to the embodiment of the present disclosure further includes a flange-shaped mounting bracket 80 that is coupled to the tube guide 10 in order to install the tube guide 10 with respect to the casing of the transmission. In this case, the tube guide 10 and the mounting bracket 80 are respectively provided with through-holes that can communicate with the pressure chamber 16 for the communication with an externally positioned operating pressure supply unit.

In addition, the plug 60 includes a mounting portion 64 for assembly with the mounting bracket 80. The mounting portion 64 may be composed of a pair of members that branch on both sides with the stem portion 62 interposed therebetween. In this case, the mounting portion 64 of the plug 60 and the mounting bracket 80 should be coupled by screw-fastening through the use of a bolt and a nut.

Also, the concentric clutch actuator according to the embodiment of the present disclosure further includes a retainer spring 90 installed between the piston 20 and the release bearing 30 in the axial direction in order to mitigate an impact caused by an axial load generated when the release bearing 30 and the diaphragm spring come into contact.

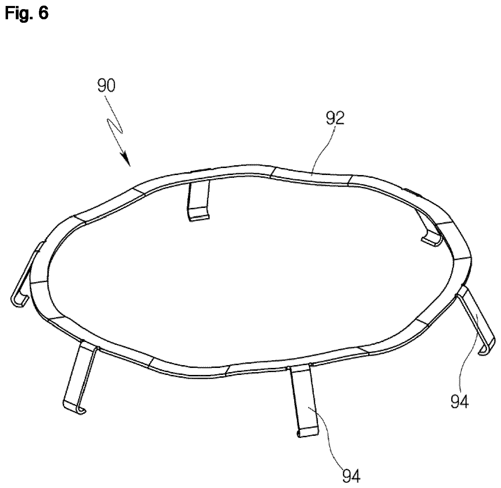

In this case, as shown in FIG. 6, the retainer spring 90 includes an annular wave spring body 92 and a catching piece 94. The annular wave spring body 92 has a shape that is continuously corrugated along the circumferential direction. The annular wave spring body 92 is supported in contact with the release bearing 30. The catching piece 94 branches in the axial direction and extends at a position radially spaced apart from the wave spring body 92 and has a free end coupled to and supported by the piston 20.

Also, the concentric clutch actuator according to the embodiment of the present disclosure further includes a hollow dust cover 100. The hollow dust cover 100 is installed between the tube guide 10 and the piston 20 and is associated with the axial direction movement of the piston 20.

In this case, the dust cover 100 may be configured such that one end thereof is fixed to the piston 20 and the other end is slidably assembled to the outer peripheral surface of the tube guide 10. To this end, the dust cover 100 and the piston 20 are provided with a catching means which is formed at a position where they face each other for fixing the one end of the dust cover 100 and restricts the axial direction movement. Since such a catching means is known, a detailed structure thereof will be omitted.

In addition, the dust cover 100 includes a scraper ring 102 installed at a contact portion with the outer peripheral surface of the tube guide 10 in order to reduce friction and prevent the introduction of foreign substances.

Also, the concentric clutch actuator according to the embodiment of the present disclosure further includes a sealing member 104 which is installed at the contact portion between the tube guide 10 and the piston 20 and maintains the sealing of the pressure chamber 16.

In this case, it would be desirable that the sealing member 104 is installed in seating grooves positioned respectively on the inner and outer peripheral surfaces of the piston 20, and free ends of the inner and outer sides in the radial direction come individually into contact with the inner and outer peripheral surfaces of the tube guide 10 in a sealed state respectively.

That is, the sealing member 104 is installed on the inner peripheral surface of the inner member 22 and the outer peripheral surface of the outer member 24 of the piston 20 respectively and maintains optimal sealing of each of the outer peripheral surface of the inner member 12 and the inner peripheral surface of the outer member 14 of the tube guide 10, thereby blocking the operating pressure supplied to the inside of the pressure chamber 16 of the tube guide 10 from leaking to the outside. In other words, the sealing member 104 serves to maintain normally the sealed state of the inner and outer portions in the radial direction between the piston 20 and the tube guide 10 having the hollow double cylinder structure.

Also, the concentric clutch actuator according to the embodiment of the present disclosure further includes a restoring spring 110. The restoring spring 110 is installed in the pressure chamber 16 positioned within the tube guide 10 and moves the piston 20 to a restoration position. For example, the restoration spring 110 is installed such that one end thereof is fixed to the tube guide 10 and the other end is fixed to the piston 20. When the operating pressure is released, the restoration spring 110 may be composed of a tension spring for restoring the piston 20 to an original position of the piston 20.

Therefore, according to the embodiment of the present disclosure, it is possible to detect the displacement of the piston 20 by measuring the position of the magnet 50 installed in the holder 40 through the medium of the displacement sensor 70 installed in the plug 60 when the clutch is operated. In particular, according to the present disclosure, through the axial assembly of the stem portion of the plug to the receiving portion of the holder, it is possible to implement an anti-rotation function that can support a torque applied to the piston by the change in the engine RPM.

That is, according to the embodiment of the present disclosure, the displacement sensor 70 is installed in the plug 60 fixed to the tube guide 10, and the magnet 50 is installed in the holder 40 fixed to the piston 20. Then, the stem portion 62 of the plug 60 is inserted and assembled to the receiving portion 42 of the holder 40. Thus, when the clutch is operated, the holder 40 is displaced axially integrally with the piston 20 in the state where the magnet 50 has been installed, and the plug 60 can allow only the axial direction movement of the holder 40 in the state where the displacement sensor 70 has been installed. Accordingly, it is possible to the anti-rotation function capable of measuring the displacement of the piston 20 and of restricting the rotation of the piston 20.

## Claims

1. A concentric clutch actuator comprising:
a tube guide configured to be installed in a casing of a transmission and form a pressure chamber therein;
a piston configured to be installed movably within the pressure chamber of the tube guide and comprise a release bearing that is installed on the piston and presses a diaphragm spring of the clutch;
a holder configured to be fixed to the piston and have a magnet installed therein; and
a plug configured to be installed on the tube guide and have a displacement sensor that measures a stroke of the piston by detecting a position of the magnet,
wherein the holder comprises a receiving portion for assembly with the plug, and the plug comprises a stem portion that extends in an axial direction in order to guide an axial direction movement relative to the receiving portion of the holder and is assembled to an inside of the receiving portion of the holder.

2. The concentric clutch actuator of claim 1,
wherein the holder comprises:
a first mounting portion for assembly with the piston; and
a second mounting portion for installation of the magnet,
and wherein the receiving portion is formed between the first mounting portions, so that the holder is installed in such a way as to be able to only move in the axial direction along the stem portion of the plug.

3. The concentric clutch actuator of claim 2, wherein the first mounting portion is composed of a pair of members that branch on both sides with the receiving portion placed therebetween, and the second mounting portion is disposed at a position spaced apart from the receiving portion in a radial direction.

4. The concentric clutch actuator of claim 1, further comprising a mounting bracket that is coupled to the tube guide in order to install the tube guide with respect to the casing of the transmission, wherein the plug comprises a mounting portion for assembly with the mounting bracket, and wherein the mounting portion is composed of a pair of members that branch on both sides with the stem portion interposed therebetween.

5. The concentric clutch actuator of claim 1, further comprising a retainer spring installed between the piston and the release bearing in the axial direction in order to mitigate an impact caused by an axial load generated when the release bearing and the diaphragm spring come into contact, wherein the retainer spring comprises an annular wave spring body and a catching piece, wherein the annular wave spring body has a shape that is continuously corrugated along a circumferential direction and is supported in contact with the release bearing, and wherein the catching piece branches in the axial direction and extends at a position radially spaced apart from the wave spring body and has a free end coupled to and supported by the piston.

6. The concentric clutch actuator of claim 1, further comprising a hollow dust cover that is installed between the tube guide and the piston and is associated with an axial direction movement of the piston, wherein one end of the dust cover is fixed to the piston and the other end of the dust cover is slidably assembled to an outer peripheral surface of the tube guide.

7. The concentric clutch actuator of claim 6, wherein the dust cover comprises a scraper ring installed at a contact portion with the outer peripheral surface of the tube guide in order to reduce friction and prevent introduction of foreign substances.

8. The concentric clutch actuator of claim 1, further comprising a sealing member which is installed at a contact portion between the tube guide and the piston and maintains sealing of the pressure chamber, wherein the sealing member is installed in seating grooves positioned respectively on inner and outer peripheral surfaces of the piston, and free ends of inner and outer sides in a radial direction come into contact with inner and outer peripheral surfaces of the tube guide in a sealed state respectively.

9. The concentric clutch actuator of claim 1, further comprising a restoring spring that is installed in the pressure chamber positioned within the tube guide and moves the piston to a restoration position, wherein the restoration spring is installed such that one end of the restoration spring is fixed to the tube guide and the other end of the restoration spring is fixed to the piston.
